# NEUE EUROPÄISCHE PATENTSCHRIFT

(11) **EP 0 522 118 B2**
(45) Veröffentlichungstag und Bekanntmachung des Hinweises auf die Entscheidung über den Einspruch: **19.12.2001**
(45) Hinweis auf die Patenterteilung: 27.09.1995
(21) Anmeldenummer: 92902959.3
(22) Anmeldetag: 30.01.1992
(51) Int. Cl.: G01N 27/407

(54) **VORRICHTUNG ZUM KONTINUIERLICHEN ÜBERWACHEN DER KONZENTRATIONEN VON GASFÖRMIGEN BESTANDTEILEN IN GASGEMISCHEN**
DEVICE FOR THE CONTINUOUS MONITORING OF THE CONCENTRATIONS OF GASEOUS COMPONENTS OF GAS MIXTURES
DISPOSITIF DE CONTROLE EN CONTINU DE LA CONCENTRATION EN CONSTITUANTS GAZEUX DE MELANGES GAZEUX

(30) Priorität: 30.01.1991 DE 4102741; 22.03.1991 DE 4109516
(43) Veröffentlichungstag der Anmeldung: 13.01.1993
(60) Teilanmeldung: 94118269.3
(73) Patentinhaber: Heraeus Electro-Nite International N.V., 3530 Houthalen (BE)
(72) Erfinder: SCHÖNAUER, Ulrich, D-7500 Karlsruhe 1 (DE); HÄFELE, Edelbert, D-7500 Karlsruhe 41 (DE)
(74) Vertreter: Säger, Manfred, Dipl.-Ing.
(86) Internationale Anmeldenummer: EP9200199
(87) Internationale Veröffentlichungsnummer: WO9214143

(56) Entgegenhaltungen:
- EP-A- 0 057 393
- EP-A- 0 257 842
- DE-A- 3 504 498
- US-A- 4 283 261
- US-A- 4 902 400

## Beschreibung

Die Erfindung betrifft eine Vorrichtung gemäß dem Oberbegriff des Hauptanspruchs.

Eine solche Vorrichtung ist bekannt (US-A-4 283 261). Bei dieser Vorrichtung ist das Zeitverhalten noch unbefriedigend.

Weitere Vorrichtungen zum Überwachen der Konzentrationen von gasförmigen Bestandteilen in Gasgemischen sind ebenfalls bekannt (DE-OS 36 10 363). Diese bekannten Vorrichtungen haben sich insgesamt bewährt

Nachteilig ist jedoch deren komplizierterAufbau. So muß bei der Herstellung dieser Vorrichtungen als Sonde Gasdichtigkeit erzielt werden und nach Herstellung eine Gasdichtigkeitsprüfung durchgeführt werden, wodurch die Gestehungskosten für die Sonde teuer werden. Hinzu kommt, daß in dem Sondenrohr noch eine separate Heizung vorgesehen werden muß; infolgedessen läßt sich keine kompakte Bauweise erzielen und ein schlechter Wärmeübergang zwischen der Heizung und dem Sondenrohr mit allen daraus resultierenden Nachteilen wie hoher Energiebedarf und inhomogene Temperaturverteilung ist zu erwarten. Hierdurch bedingt, ergibt sich auch ein relativ großer Einbauraum. Ferner ist aufgrund der großen Maße und die für deren Erwärmung benötigte Zeit von mindestens 60 s beim Einschalten nicht sofort Betriebsbereitschaft gegeben. Außerdem muß relativ viel Energie zum Heizen während des gesamten Betriebes aufgewendet werden. Ein wesentlicher Nachteil ist, abgesehen von der Trägheit dieses bekannten Systems die infolge der Temperaturabhängigkeit des Meßsignals der Sensoren nur mäßige Genauigkeit. Schließlich muß der bekannten Vorrichtung Luft als Referenzgasgemisch zugeführt werden, wodurch nicht nur das Gehäuse komplexer gestaltet werden muß, sondern auch der Einbauort nicht frei gewählt werden kann.

Ein weiterer Sensor zum Bestimmen von Sauerstoff ist gleichfalls bekannt (EP-0 057 393 A1). Er besteht aus einem Träger aus Al₂O₃, auf dem Elektroden aus Platin aufgebracht sind, die durch eine Schicht aus Sauerstoff-leitendem Festelektrolyt aus ZrO₂ getrennt sind.

Bei diesem Sensorsystem liegen nicht alle Elektroden frei im Gasraum. Es ist immer mindestens eine Elektrode entweder durch den Festelektrolyten oder durch eine gasundurchlässige Schicht abgedeckt. Die abgedeckte Elektrode wird hier als Referenzelektrode der elektrochemischen Zelle zur Sauerstoffpartialdruckmessung eingesetzt.

Das beschriebene Meßsystem stellt zwar eine in einer Schichttechnologie hergestellte Festelektrolytzelle zur Bestimmung des Sauerstoffpartialdruckes dar, ist aber nicht geeignet, die Konzentration bzw. den Partialdruck anderer Gaskomponenten (und nicht es Sauerstoffs) zu bestimmen.

Es ist ferner eine Vorrichtung zur Messung der Konzentration von NOₓ bekannt (EP-A-0 257 842) bei der auf der den Elektroden entgegengesetzten Seite des einzigen Festelektrolyten zwei gegenelektroden und eine davon beabstandete Widerstandsheizschicht vorgesehen ist die mit einer elektrischen Isolationsschicht umgeben ist.

Der Erfindung liegt die Aufgabe zugrunde, eine Vorrichtung gemäß dem Oberbegriff des Hauptanspruchs mit einfacherem und zugleich für die Messung mehrerer gasförmiger Bestandteile eines Gasgemisches geeigneter Aufbau, platzsparendem und ortsmäßig wahlfreiem Einbau mit besseren Ansprechverhalten und genaueren Meßergebnissen unter Einsatz von weniger Heizleistung mit verbessertem Zeitverhalten vorzuschlagen.

Diese Aufgabe wird bei einer Vorrichtung gemäß dem Oberbegriff des Hauptanspruchs erfindungsgemäß durch dessen kennzeichnende Merkmale gelöst.

Hierbei wird als Träger ein Plättchen aus einem Festelektrolyten vorgesehen, auf dessen einer Seite die Elektroden und auf dessen anderer Seite eine, vorzugsweise mäanderförmig ausgebildete Widerstandsheizschicht aufgebracht ist, die das dünne Plättchen in wenigen Sekunden auf Betriebstemperatur aufheizt, so daß es betriebsbereit ist. Eine elektrisch isolierende Oxidschicht wird zwischen der Widerstandsheizschicht und dem Plättchen angeordnet. Aufgrund der geringen Masse und Abmessungen des Trägerplättchens wird für den laufenden Betrieb nur vergleichsweise wenig Heizleistung benötigt. Ist auf der einen Seite noch ein Temperaturfühler aufgebracht, der die gemittelte, effektive Temperatur in unmittelbarer Nähe der Elektroden mißt, so wird ein Höchstmaß an Meßgenauigkeit erzielt werden. Durch die Verwendung des Plättchens wird ferner ein deutlich kleineres Einbaumaß erzielt, ohne daß ein kompliziertes und teures Gehäuse erforderlich wäre. Bedingt durch die kleinen Abmessungen sowie der nicht notwendigen Referenzelektrode, die beim Stand der Technik einem Referenzgas (z.B. Luft) ausgesetzt sein muß, kann auch die erfindungsgemäße Vorrichtung an sonst nur schwer zugänglichen Stellen, beispielsweise im Abgasstrang von Kraftfahrzeugen angebracht werden. Aufgrund der nur als Schichten aufgebrachten Komponenten ist auch eine einfache Herstellung mittels Schichttechnologien möglich. Eine Dichtigkeitsprüfung entfällt. Auch kann mit der erfindungsgemäßen Vorrichtung die Konzentration von Sauerstoff im zu messenden Gas sowie von Begleitgasen bestimmt werden.

Auf der einen Seite des Plättchens werden nicht nur eine, sondern mehrere Elektroden aufgebracht, die jeweils mit verschiedenen Bestandteilen in dem Gasgemisch wechselwirken. So können unter Verwendung jeweils eines einzigen Gehäuses, Plättchens, Temperaturfühlers und einer Widerstandsheizschicht verschiedene Bestandteile des Gasgemisches, z.B. CO, NO oder HC sowie O₂ gleichzeitig bestimmt werden. Ist hierbei der Sauerstoffgehalt konstant, so liegen die elektrischen Meßsignale zwischen einer als Referenz dienenden Elektrode und jeder der anderen Elektroden an. Wenn der Sauerstoffgehalt in dem zu überwachenden Gasgemisch hingegen schwankt, so sind zwei der möglichen elektrochemischen Halbzellen zum Messen des Sauerstoffes ausgelegt. Eine der Halbzellen ist dabei vorteilhafterweise als Feststoffreferenz (z.B. Palladium/Palladiumoxid) und die andere Halbzelle zur Bestimmung der tatsächlichen Sauerstoffkonzentration im Abgas ausgelegt.

Weitere zweckmäßige Ausgestaltungen und Weiterbildungen der Erfindung sind in den Unteransprüchen gekennzeichnet. So kann beispielsweise der Temperaturfühler mäanderförmig in der Mitte des Plättchens zwischen den Elektroden angeordnet sein.

Ein bevorzugtes Ausführungsbeispiel der Erfindung wird nachfolgend unter Bezugnahme auf die Zeichnung näher erläutert. In dieser zeigt:
- Figur 1: eine erste Ausführungsform, mit zwei Elektroden zur Bestimmung eines Bestandteils des Gases in Draufsicht;
- Figur 2: die erste Ausführungsform, im teilweise abgeschnittenen Querschnitt,
- Figur 3: die erste Ausführungsform gemäß Fig. 1, in Druntersicht;
- Figur 4: eine zweite Ausführungsform der Erfindung, zur gleichzeitigen Bestimmung mehrerer Bestandteile des Gasgemisches in schematischer Draufsicht.
- Figur 5: eine nicht erfindungsgemäße Ausführungsform, in schematischer Draufsicht, und
- Figur 6: einen Schnitt VI-VI gemäß Fig. 5.

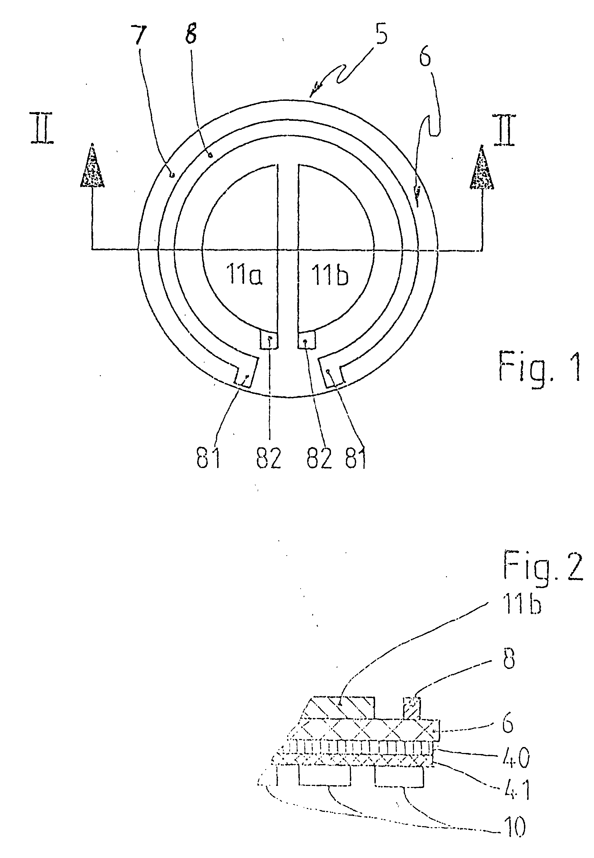

Die Vorrichtung 5 weist als Träger für die elektrochemische Zelle ein Plättchen 6 aus ZrO₂ auf, auf dessen einer Seite 7 (Fig. 1) die Elektroden aufgebracht sind, und die nachfolgend noch näher erläutert wird. Ferner ist auf der einen Seite 7 ein die elektrochemischen Zellen umschließender, insgesamt etwa kreisringförmiger Temperaturfühler 8 vorgesehen, der auf der einen Seite 7 mit ihren Anschlußpunkten 81 ebenso wie die elektrochemische Zelle mit Anschlußpunkten 82 versehen ist, an die - nicht gezeigte - Anschlüsse von elektrischen Leitungen angebracht und zu einer Auswerteanordnung geführt werden können.

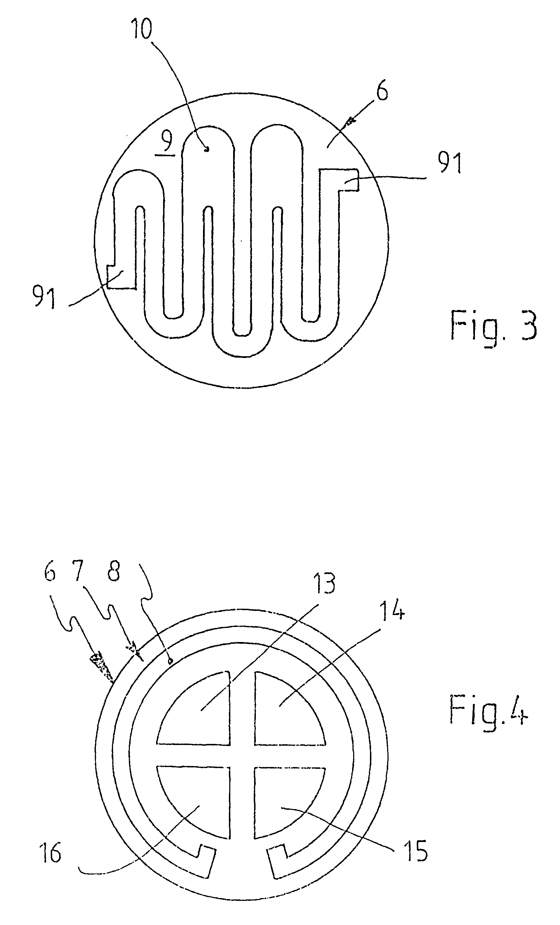

Auf der Rückseite 9 (Fig. 3) des Plättchens 6 ist eine Widerstandsheizschicht 10 vorgesehen, die in Draufsicht mäanderförmig aufgebracht ist und ebenfalls Anschlüsse 91 aufweist.

Auf dem dünnen, in Draufsicht kreisrunden Plättchen sind wie die Figuren 1 und 2 zeigen, auf der einen Seite 7 ferner zwei verschiedene metall- und/oder metalloxidhaltige Elektroden 11a, 11 b in Form einer dünnen Schicht aufgebracht, die jeweils voneinander beabstandet angeordnet sind. Diese mittels Siebdrucktechnik und anschließendem Sintern hergestellte Vorrichtung in Planar- bzw. Dickschichttechnologie weist eine äußerst geringe Masse und kleine Einbaumaße auf und benötigt darüber hinaus nur noch ein einfaches Gehäuse als Halterung. Außerdem ist von Vorteil, daß direkt in unmittelbarer Nähe der Elektroden mittels des Temperaturfühlers die gemittelte effektive Temperatur abgenommen wird. Weiterhin ist das Heizelement auf der anderen Seite des Plättchens so angebracht, daß nur ein geringer Abstand zwischen der elektrischen Widerstandsheizschicht und den Elektroden besteht, wodurch eine kurze Ansprechzeit sichergestellt ist. Zum anderen muß nur eine geringe Masse in Form des Plättchens und der darauf angebrachten Einzelschichten geheizt werden, so daß zum Betrieb eine nur geringe Heizleistung notwendig ist.

Bei der in Fig. 2 gezeigten Ausführungsform wird auf der Unterseite 9 des Plättchens 6 eine Gegenelektrode 40 mit einer darunter liegenden Isolierschicht 41 vorgesehen, auf der dann die Widerstandsheizschicht 10 vorgesehen ist. Bei dieserAusführungsform ist zusätzlich ein verbessertes Zeitverhalten der Meßzelle realisiert.

Mit besonderem Vorteil können in zweckmäßiger Ausgestaltung bei der in Fig. 4 dargestellten zweiten Ausführungsform auf den Plättchen 6 bzw. dessen einer Seite 7 auf dem Träger 6 zwei oder mehr verschiedene Elektroden 13, 14 oder 15 angebracht sein, um gleichzeitig verschiedene Bestandteile in dem gasförmigen Gemisch zu messen. Hierbei dient dann eine Elektrode 16 als Referenzpotential, gegen die das Potential der anderen Elektroden 13, 14 und 15 gemessen werden.

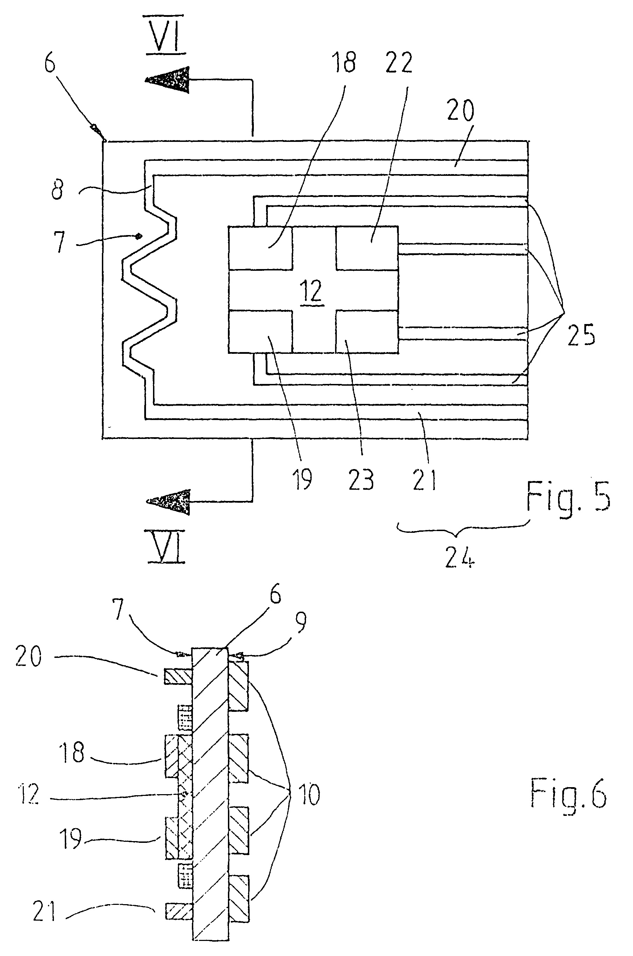

In Fig. 5 ist eine nicht erfindungsgemäße Ausführungsform dargestellt. Bei dieser Ausführungsform wird ein Plättchen 6 aus nicht-ionenleitender Keramik, vorzugsweise Al₂O₃ verwendet, auf dem als dünne Schicht in Dickschichttechnik als Festelektrolyt 12 Yttrium stabilisiertes ZrO₂ aufgebracht ist. Ferner befindet sich auf der einen Seite 7 des Plättchens 6 ein Temperaturfühler 8 und auf der Rückseite (Fig. 6) ferner die elektrische Widerstandsheizschicht 10. Auf der dünnen Schicht des in Dickschichttechnologie aufgebrachten Festelektrolyten 12 sind ferner die Elektroden 18, 19, 22 und 23 aus Metall und/oder Metolloxid aufgebracht, die jeweils speziell mit anderen Bestandteilen im Gasgemisch wechselwirken, so daß auf deren Konzentration im zu messenden Gasgemisch bestimmt werden können. Der Temperaturfühler 8 kann auch auf dem Festelektrolyten 12 angebracht sein.

Zum Abgriff der Potentiale der Elektroden 18, 19, 22, 23 und des Meßsignals des Temperaturfühlers 8, sowie zur Zuführung des Heizstromes zur Widerstandsheizschicht 10 sind auf dem Plättchen 6 über dem mit 24 bezeichneten Bereich (Anschlußstück) Metallschichten als elektrische Zuleitungen aufgebracht. Das Anschlußstück 24 dient dazu, die Verbindung der Sonde mit Zuleitungskabeln in hinreichend großer Entfernung vom Meßort zu ermöglichen.

## Patentansprüche

1. Vorrichtung zur kontinuierlichen Überwachung der Konzentration von zumindest einem gasförmigen Bestandteil in Gasgemischen mit einem, zumindest zwei elektrochemische Halbzellen mit einem Sauerstoffionen-leitenden Festelektrolyten und einer mit einer porösen Festkörperstruktur versehenen, vorzugsweise metall- und/oder metalloxidhaltige mit den gasförmigen Bestandteilen wechselwirkenden Elektrode als dünne Schicht aufweisenden Träger (6), wobei ein von der Konzentration des Bestandteils abhängiges elektrisches Potential erzeugt wird, mit einer Heizung und mit elektrischen Leitungen zum Anschluß und zum Abgriff für die elektrischen Potentiale, wobei
der Träger als Plättchen (6) aus einem Festelektrolyten ausgebildet ist,
auf dessen einer Seite zumindest zwei Elektroden (11a, 11b) als voneinander beabstandet angeordnete dünne Schichten aufgebracht sind,
auf der einen Seite (7) des Plättchens (6) ferner ein von den Elektroden (11a, 11b) beabstandeter Temperaturfühler (8) aufgebracht ist und
auf der anderen Seite (9) des Plättchens (6) eine elektrische Widerstandsheizschicht (10) als Heizung vorgesehen ist,
**dadurch gekennzeichnet,**
**daß** zur kontinuierlichen Überwachung der Konzentration von zumindest zwei gasförmigen Bestandteilen auf der den zumindest zwei Elektroden (11a, 11b, 13 - 16) gegenüberliegenden Unterseite (9) des Plättchens (6) eine Gegenelektrode (40) mit einer darunter liegenden Isolierschicht (41) angeordnet ist, auf der die Widerstandsheizschicht (10) vorgesehen ist,
wobei die elektrischen Potentiale in einem Rechner selbsttätig elektronisch auswertbar und in Konzentrationswerte umrechenbar sind.

2. Vorrichtung nach mindestens einem der vorhergehenden Ansprüche, **dadurch gekennzeichnet, daß** der Temperaturfühler (8) am Rand des Plättchens (6) um die Elektroden (11a, 11b) herumgeführt ist.

3. Vorrichtung nach mindestens einem der vorhergehenden Ansprüche, **dadurch gekennzeichnet, daß** der Temperaturfühler mäanderförmig in der Mitte des Plättchens (6) zwischen den Elektroden (11a, 11b) angeordnet ist.

4. Vorrichtung nach mindestens einem der vorstehenden Ansprüche, **dadurch gekennzeichnet, daß** der Festelektrolyt stabilisiertes Zirkondioxid (ZrO₂) aufweist.

5. Vorrichtung nach mindestens einem der vorstehenden Ansprüche, **dadurch gekennzeichnet, daß** die elektrische Widerstandsheizschicht (10) als mäanderförmige Bahn ausgebildet ist.

6. Vorrichtung nach mindestens einem der vorstehenden Ansprüche, **dadurch gekennzeichnet, daß** alle Schichten, nämlich die der Elektroden (11a, 11b, 13-16), der Temperaturfühler (8) und die Widerstandsheizschicht (10) in Dickschichttechnologie auf dem Plättchen (6) aufgebracht sind.

7. Vorrichtung nach Anspruch 6, **dadurch gekennzeichnet, daß** die Schichten mittels Siebdruck aufgebracht sind.

## Claims

1. A device for continuously monitoring the concentration of at least one gaseous component in gas mixtures comprising a carrier (6) having at least two electrochemical half-cells with an oxygen ion-conducting solid electrolyte and a preferably metal- and/or metal oxide-bearing electrode in the form of a thin layer, provided with a porous solid-state structure and interacting with the gaseous components, wherein an electrical potential dependent on the concentration of the component is produced, comprising a heating means and electrical lines for the purposes of connection and taking off the electrical potentials wherein
the carrier is in the form of a small plate portion (6) comprising a solid electrolyte,
disposed on one side thereof are at least two electrodes (11a, 11b) in the form of thin layers arranged at a spacing from each other,
disposed on the one side (7) of the plate portion (6) there is also a temperature sensor (8) which is spaced from the electrodes (11a, 11b), and
provided on the other side (9) of the plate portion (6) is an electrical resistance heating layer (10) as the heating means,
**characterised in that** for continuously monitoring the concentration of at least two gaseous components arranged on the underside (9) of the plate portion (6), which is opposite to the at least two electrodes (11a, 11b, 13-16), is a counter-electrode (40) with an insulating layer (41) which is disposed thereunder and on which the resistance heating layer (10) is provided,
wherein the electrical potentials can be automatically electronically evaluated in a computer and converted into concentration values.

2. A device according to claim 1 **characterised in that** the temperature sensor (8) is taken around the electrodes (11a, 11b) at the edge of the plate portion (6).

3. A device according to at least one of the preceding claims **characterised in that** the temperature sensor is disposed in a meander configuration in the middle of the plate portion (6) between the electrodes (11a, 11b).

4. A device according to at least one of the preceding claims **characterised in that** the solid electrolyte has stabilised zirconium dioxide (ZrO₂).

5. A device according to at least one of the preceding claims **characterised in that** the electrical resistance heating layer (10) is in the form of a track of a meander configuration.

6. A device according to at least one of the preceding claims **characterised in that** all layers, namely those of the electrodes (11a, 11b, 13-16) and the temperature sensor (8) and the resistance heating layer (10) are applied to the plate portion (6) by a thick film technology.

7. A device according to claim 6 **characterised in that** the layers are applied by means of screen printing.

## Revendications

1. Dispositif de contrôle en continu de la concentration d'au moins un constituant gazeux de mélange gazeux comprenant un support (6) présentant au moins deux demi-cellules électrochimiques avec un électrolyte solide conduisant les ions d'oxygène et une électrode sous forme de couche mince possédant une structure de corps solide poreuse, de préférence contenant un métal ou un oxyde métallique réagissant avec les constituants gazeux, un potentiel électrique fonction de la concentration du constituant étant produit, un chauffage et des lignes électriques pour le raccordement et la prise des potentiels électriques, le support étant conçu comme une plaquette (6) réalisée dans un électrolyte solide, sur une face de laquelle au moins deux électrodes (11a, 11b) sont disposées en couches minces à une certaine distance l'une de l'autre, sur l'une des faces (7) de la plaquette (6) une sonde de température (8) étant en outre disposée à une certaine distance des électrodes (11a, 11b) et sur l'autre face (9) de la plaquette (6), une couche de chauffage électrique par résistance (10) étant prévue comme chauffage, **caractérisé en ce que**, pour le contrôle en continu de la concentration d'au moins deux constituants gazeux, une contre-électrode (40) avec une couche isolante (41) placée au-dessous, sur laquelle est prévue la couche de chauffage par résistance (10), est disposée sur la face inférieure (9) de la platine (6) opposée aux deux électrodes au moins (11a, 11b, 13 à 16), les potentiels électriques étant calculés automatiquement de manière électronique par un ordinateur et convertibles en valeurs de concentration.

2. Dispositif suivant au moins la revendication précédente, **caractérisé en ce que** la sonde de température (8) entoure les électrodes (11a, 11b) au bord de la plaquette (6).

3. Dispositif suivant au moins l'une des revendications précédentes, **caractérisé en ce que** la sonde de température est disposée en forme de méandres au centre de la plaquette (6) entre les électrodes (11a, 11b).

4. Dispositif suivant au moins l'une des revendications précédentes, **caractérisé en ce que** l'électrolyte solide contient du dioxyde de zirconium stabilisé (ZrO₂).

5. Dispositif suivant au moins l'une des revendications précédentes, **caractérisé en ce que** la couche de chauffage électrique par résistance (10) présente un parcours à méandres.

6. Dispositif suivant au moins l'une des revendications précédentes, **caractérisé en ce que** toutes les couches, à savoir celle des électrodes (11a, 11b, 13 à 16), la sonde de température (8) et la couche de chauffage par résistance (10) sont déposées sur la plaquette (6) suivant la technologie des couches épaisses.

7. Dispositif suivant la revendication 6, **caractérisé en ce que** les couches sont déposées par sérigraphie.
